# EUROPÄISCHE PATENTSCHRIFT

(11) **EP 1 982 819 B1**
(45) Veröffentlichungstag und Bekanntmachung des Hinweises auf die Patenterteilung: **02.07.2014**
(21) Anmeldenummer: 08007476.8
(22) Anmeldetag: 17.04.2008
(51) Int. Cl.: B29C 47/88, B29C 47/92, B29C 47/90, B29C 47/76

(54) **Verfahren und Vorrichtung zur Kühlung eines Folienschlauches bei der Blasfolienherstellung**
Method and device for cooling a tubular film when manufacturing a blown film
Procédé et dispositif de refroidissement d'un film tubulaire lors de la fabrication de feuilles soufflées

(30) Priorität: 17.04.2007 DE 102007018417
(43) Veröffentlichungstag der Anmeldung: 22.10.2008
(73) Patentinhaber: Kdesign GmbH, 53639 Königswinter (DE)
(72) Erfinder: Zimmermann, Richard, 53127 Bonn (DE)
(74) Vertreter: Neumann, Ernst Dieter

(56) Entgegenhaltungen:
- EP-A- 0 273 739
- EP-A- 1 719 602
- EP-A1- 0 583 619
- GB-A- 2 112 703
- JP-A- 58 094 434
- JP-A- 58 219 021
- US-A1- 2002 130 431

## Beschreibung

Die Erfindung betrifft eine Vorrichtung nach dem Oberbegriff des Anspruchs 1.

Der Folienschlauch wird immer mit vertikaler Längsachse A hergestellt und abgezogen, wobei in der Regel die Abzugsrichtung bei entsprechender Ausrichtung der Ringdüse von unten nach oben gerichtet ist. Es kann die Abzugsrichtung allerdings auch bei entsprechender Ausrichtung der Ringdüse von oben nach unten orientiert sein.

Die nachfolgenden Ausführungen auch zum Stand der Technik beziehen sich sämtlich auf die Abzugsrichtung von unten nach oben, ohne daß die Abzugsrichtung von oben nach unten hiermit von der Erfindung ausgeschlossen werden soll.

Für die Ausstoßleistung und damit für die Wirtschaftlichkeit des vorstehend genannten Verfahrens zur Herstellung von Folienschläuchen bzw. der Vorrichtungen, die dafür Verwendung finden, ist die Kühlung des Folienschlauches vom Austritt aus der Ringdüse bis zum Erreichen einer sogenannten Einfriergrenze ein ausschlaggebender Faktor, d.h. die Steigerung der Ausstoßrate ist nur mit einer Erhöhung der Kühlwirkung zu erreichen.

Zur Kühlung werden herkömmlich sogenannte Dualkühlringe verwendet, die unmittelbar oberhalb der Ringdüse angeordnet sind und die ein einheitliches Kühlringgehäuse, hierbei jedoch Kühlgasringdüsen aufweisen, die zwei Ausblasebenen für Kühlgas bilden. Eine Vorrichtung der eingangs genannten Art zeigen GB 2112703 A und US 2002/0130431 A1. Ein Beispiel für einen Dualkühlring findet sich in der US 5 804 221 A.

Zur weiteren Steigerung der Kühlwirkung sind sogenannte Doppelkühlringe bekannt. bei denen zwei unabhängige Kühlringgehäuse in Produktionsrichtung hintereinander und voneinander beabstandet angeordnet sind, wobei der untere Kühlring unmittelbar auf den Folienblaskopf montiert ist und der obere Kühlring gegenüber dem unteren höhenverstellbar angeordnet ist. Beim Eintritt in den oberen Kühlring ist der Folienschlauch bereits durch den unteren Kühlring vorgekühlt. Hierbei wird die Wirkung des oberen Kühlrings dadurch beeinträchtigt, daß das aus dem unteren Kühlring austretende Kühlgas bereits entlang des Folienschlauches aufgeheizt ist und von unten in den oberen Kühlring eintritt. Weiterhin wird der Zugang zur Ringdüse, der beim Anfahren der Anlage erforderlich ist, durch den auf dem Folienblaskopf aufsitzenden unteren Kühlring erschwert. Eine Vorrichtung der hiermit beschriebenen Art ist beispielsweise aus der EP 1 719 602 A1 bekannt.

Aus der DE 32 43 884 A1 ist es bereits bekannt, bei der Herstellung eines Folienschlauches Kühlluft sowohl in Extrusionsrichtung als auch entgegengesetzt zur Extrusionsrichtung aus entsprechenden Kühlringen auszubringen. Diese Kühlringe sind mit einem Ringkanal versehen, das von einem einzelnen Luftbeschickungsrohr versorgt wird. Kühlringe mit ähnlichem Aufbau sind weiterhin in der JP 59-007 019 A, in der JP 58-191 126 A und der JP 58-094 434 A dargestellt und beschrieben.

Hiervon ausgehend liegt der vorliegenden Erfindung die Aufgabe zugrunde, eine Vorrichtung der eingangs genannten Art bereitzustellen, mit denen die Kühlwirkung erhöht werden kann, um die Abzugsgeschwindigkeit des Folienschlauches und damit die Ausstoßleistung der Vorrichtung weiter steigern zu können. Hierbei sollen Qualitätseinbußen beim Ausstoß des Folienschlauches vermieden werden.

Die Aufgabe wird durch eine Vorrichtung gemäß Anspruch 1 gelöst. Vorteilhafte Ausführungsbeispiele ergeben sich aus den Unteransprüchen.

Demnach wird zumindest ein erster Kühlgasstrom K_{G} entgegen der Abzugsrichtung des Folienschlauches ausgeblasen wird und zumindest ein weiterer Kühlgasstrom K_{A} in Abzugsrichtung des Folienschlauches ausgeblasen wird und bei dem zumindest einer der Kühlgasströme zumindest in seinem Volumenstrom oder seiner Temperatur über dem Umfang sektorweise steuerbar ist. Es ist insbesondere vorgesehen, daß der am nächsten zur Ringdüse ausgeblasene Kühlgasstrom K_{A} entgegen der Abzugsrichtung des Folienschlauches ausgeblasen wird, während der von der Ringdüse am weitesten entfernt ausgeblasene Kühlgasstrom in Abzugsrichtung des Folienschlauches ausgeblasen wird. Eine gegenseitige Störung oder Beeinflussung der Kühlgasströme kann so verhindert werden. Wesentlich ist, daß die erste Ausblasebene in einigem Abstand von der Ringdüse angeordnet ist. Der wesentliche Effekt, der zur Steigerung der Kühlwirkung führt, liegt darin, daß nicht mehr bereits erhitztes Kühlgas aus der ersten Ausblasebene in Abzugsrichtung in den Bereich der weiteren Ausblasebene oder der weiteren Ausblasebenen eingetragen wird. Darüber hinaus erfolgt die Kühlung durch den ersten entgegen der Abzugsrichtung gerichteten Kühlgasstrom K_{G} nach dem Gegenstromkühlprinzip, d.h. das frisch zugeführte Kühlgas ist dort am kältesten, wo bereits eine reduzierte Temperatur des Folienschlauches erreicht ist, während das Kühlgas bereits etwas erwärmt ist, wo der noch heiße Folienschlauch aus der Ringdüse austritt. Auf diese Weise wird auf der gesamtem Kühlstrecke eine relativ gleichmäßige bzw. angeglichene Temperaturdifferenz aufrechterhalten, wodurch die effektivste Kühlwirkung erreicht wird. Da mit der verbesserten Kühlwirkung eine erhöhte Ausstoßrate möglich ist, werden die dabei verstärkt auftretenden Dickenfehler des Folienschlauches am Austritt aus der Ringdüse durch die erfindungsgemäß sektorweise beeinflußbare Kühlung über dem Umfang des Folienschlauches wieder ausgeglichen. Erfindungsgemäß ist also vorgesehen, daß zumindest einer der Kühlgasströme K_{G}, K_{A} in seinem Volumenstrom über dem Umfang sektorweise steuerbar ist bzw. in seiner Temperatur über dem Umfang sektorweise beeinflußbar ist. Hiermit ist es möglich, Abweichungen des Dickenprofils der Schlauchfolie über dem Umfang beim Herstellprozeß möglichst gering zu halten. Hierbei wird die Wirkung ausgenutzt, daß beim Blasen des Folienschlauches, d.h. beim Aufweiten des Schlauchdurchmessers, wärmere Bereiche stärker und kühlere Bereiche weniger stark ausgedehnt werden. Bei höherer Kühlleistung in einem Umfangssektor kühlt die Schlauchfolie schneller, wird so weniger stark gedehnt und behält somit eine relativ größere Foliendicke; bei geringerer Kühlleistung in einem Umfangssektor behält die Schlauchfolie eine höhere Temperatur, infolge dessen sie stärker dehnbar ist; somit wird die Foliendicke dort stärker vermindert. Die Foliendickeunterschiede über dem Umfang werden hierbei von einer Meßvorrichtung ermittelt und an eine Regelvorrichtung zur Variation der Kühl- oder Heizleistung übermittelt. Diese Meßvorrichtung ist in Produktionsrichtung hinter der sogenannten Einfriergrenze des Folienmaterials angeordnet, hinter der sich das Folienmaterial praktisch nicht mehr plastisch dehnt. Eine Vorrichtung mit der eine sektorweise variable Kühlung des Folienschlauches möglich ist, ist in der EP 1 736 297 A1 beschrieben.

Während der entgegen der Abzugsrichtung ausgeblasenen Kühlgasstrom K_{G} im Gegenstromkühlprinzip wirksam ist, wirkt der zweite Kühlgasstrom K_{A} der in Abzugsrichtung ausgeblasen wird, völlig ungestört von dem erstgenannten entlang dem Folienschlauch gemäß dem Gleichstromkühlprinzip. Der erstgenannte Kühlgasstrom K_{G} kann im Bereich der Ringdüse im wesentlichen ringförmig abgesaugt werden, so daß Ausgasungen aus dem Folienschlauch, die unmittelbar nach der Ringdüse am stärksten auftreten, zusammen mit dem ersten Kühlgasstrom abgeführt werden. Eine Verschmutzung von in Abzugsrichtung nachfolgenden Anlagenteilen wird so vermieden. Der zweite Kühlgasstrom K_{A}, der in Abzugsrichtung ausgeblasen wird, hat nach dem Erreichen der sogenannten Einfriergrenze des Folienschlauches keine wesentlichen Auswirkungen mehr. Ein Absaugen auch des zweiten Kühlgasstroms K_{A} in ringförmiger Verteilung über dem Umfang kann jedoch unter dem Gesichtspunkt der Vermeidung einer Verschmutzung der nachfolgenden Kalibriervorrichtung und Flachlegevorrichtung sinnvoll und vorteilhaft sein. Eine Vorrichtung dieser Art ist in der EP 1 491 319 A1 beschrieben.

Einer der Kühlgasströme K_{G} ,K_{A}, nämlich der in Abzugsrichtung gerichtete Kühlgasstrom K_{A}, ist aus zwei in unterschiedlichen Ausblasebenen austretenden Teilströmen K_{A}1, K_{A}2 gebildet.

Es ist hiermit eine Steigerung der Kühlgasmengenrate möglich, ohne die Form des Folienschlauches ungünstig zu beeinflussen.

In einfachster Ausgestaltung kann der Abstand der Ausblasebene des zumindest einen entgegen der Abzugsrichtung des Folienschlauches ausgeblasenen Kühlgasstromes K_{G} von der Ringdüse konstant sein. Für die Einstellung der Kühlwirkung ist es jedoch vorteilhaft, wenn zumindest dieser Abstand verstellbar ist, da hiermit die Länge der Kühlstrecke unmittelbar beeinflußt werden kann. Auch für die Phase des Anfahrens der Anlage ist es günstig, wenn der Abstand vergrößert werden kann, da hierbei ein freier Zugriff zu Ringdüse hilfreich ist.

Um nachteilige Auswirkungen der aus dem Folienschlauch nach der Ringdüse entstehenden Ausgasungen zu vermeiden, ist vorgesehen, daß zwischen der Ringdüse des Folienblaskopfes und der entgegen der Abzugsrichtung des Folienschlauch gerichteten ersten Kühlgasringdüse eine über den Umfang verlaufende oder verteilte Absaugvorrichtung für Kühlgas angeordnet ist. Diese kann aus einzelnen an Schläuchen angeschlossenen Absaugsegmenten bestehen, wodurch die Montage und Demontage erleichtert wird. Damit der auf Temperatur zu haltende Folienblaskopf von jeglicher Auskühlung geschützt wird, ist über dem Folienblaskopf eine ringförmige Wärmeisolierung aufzubringen oder ein ringförmiges Ableitblech oder Prallblech anzuordnen.

Da die Kühlgasringdüsen/Elemente eines gemeinsamen Kühlrings bzw. Kühlringmoduls sind, ist in konstruktiv einfacher Art nur ein gemeinsamer Ringraum über umfangsverteilte Anschlußstutzen mit Kühlgas zu versorgen, wobei vor dem endgültigen Austritt des Kühlgases aus diesem Kühlringmodul des Kühlgas in Einzelströme geteilt wird.

Weitere Einzelheiten der konstruktiven Ausgestaltung werden anhand der Zeichnungen nachfolgend verdeutlicht.

Bevorzugte Ausführungsbeispiele von erfindungsgemäßen Vorrichtungen sind in den Zeichnungen dargestellt und werden nachstehend beschrieben. Es zeigen
Figur 1 eine Folienblasanlage mit einem Kühlring der eine entgegen der Abzugsrichtung weisende Kühlgasringdüse und zwei in Abzugsrichtung weisende Kühlgasringdüsen bildet, im vertikalen Längsschnitt;
Figur 2 zeigt den Kühlring nach Figur 1 mit sektorweise im Volumenstrom regelbarem Kühlgasstrom;
Figur 3 zeigt Einzelheiten des Kühlringes nach Figur 2 in einem Querschnitt durch den Kühlring;
Figur 4 zeigt einen Kühlring ähnlich Figur 2 mit sektorweise in der Temperatur regelbarem Kühlgasstrom und
Figur 5 zeigt den Kühlring nach Figur 4 sowie einen Absaugring für Kühlgas oberhalb des Folienblaskopfes-

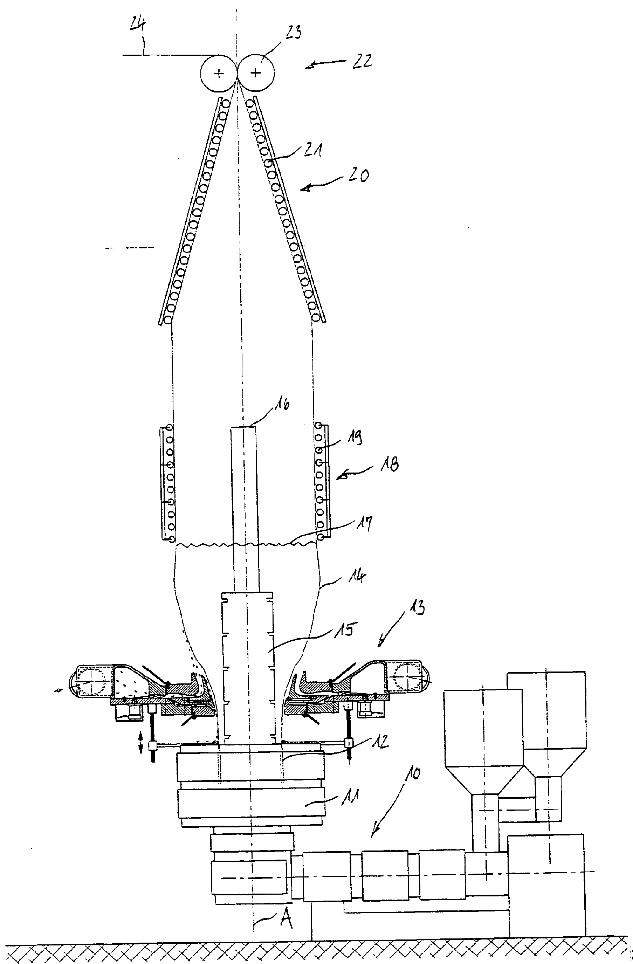

Die in Figur 1 gezeigte Vorrichtung umfaßt einen Blasfolienextruder 10 mit einem Folienblaskopf 11, der eine Ringdüse 12 zur Erzeugung eines Folienschlauches 14 bildet. Die gemeinsame Achse A von Folienblaskopf 11, Ringdüse 12 und Folienschlauch 14 verläuft vertikal. Die Abzugsrichtung des Folienschlauches 14 geht von unten nach oben.

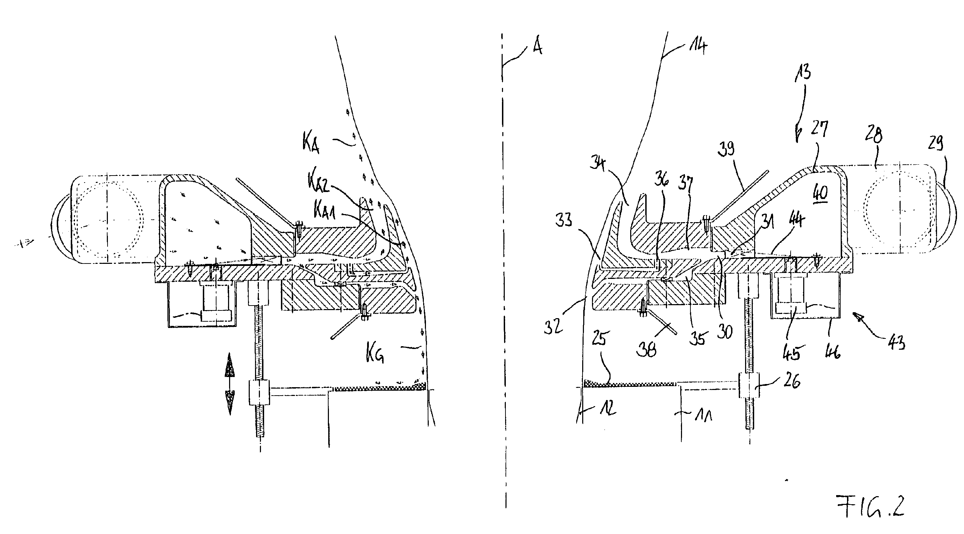

Oberhalb und mit Abstand vom Folienblaskopf 11 ist ein Kühlring 13 in koaxialer Anordnung angeordnet, der Kühlgas zur Kühlung des Folienschlauches 14 ausbringt und dessen Einzelheiten in der hier gezeigten Ausführung anhand der Figur 2 erklärt werden. Innerhalb des Folienschlauches 14 ist eine Innenkühlvorrichtung 15 mit einer Innenabsaugvorrichtung 16 für weiteres Kühlgas dargestellt. Der Kühlring 13 umfaßt verschiedene Kühlgasringdüsen, die mittels eines Venturi-Effektes einen Aufweiteffekt auf den Folienschlauch 14 erzeugen, so daß dieser in einer thermoplastisch verformbaren Phase im Durchmesser vergrößert wird, bis er eine Einfriergrenze 17 erreicht. Oberhalb der Einfriergrenze 17 ist eine mechanische Kalibriervorrichtung 18 erkennbar, in der der Foliendurchmesser und -querschnitt stabilisiert werden. Die Kalibriervorrichtung 18 läßt eine Vielzahl von Rollen 19 erkennen und ist im wesentlichen ringförmig um den Folienschlauch 14 gelegt. Eine Kalibriervorrichtung der hier gezeigten Art ist in der DE 20 2005 006 532 U1, näher beschrieben.

Oberhalb der Kalibriervorrichtung 18 ist eine Flachlegevorrichtung 20 gezeigt, die ebenfalls eine Vielzahl von Rollen 21 umfaßt. Die Flachlegevorrichtung 20 ist jedoch abweichend von der Kalibriervorrichtung etwa keilförmig und formt aus dem runden Folienschlauch eine doppellagige an den Kanten verbundene Flachfolie 24. Oberhalb der Flachlegevorrichtung 20 ist eine Abziehvorrichtung 22 mit zwei Abziehrollen 23 erkennbar, die den Folienschlauch fördern und zusammendrücken. Der Folienschlauch wird als doppellagige Flachfolie 24 weitergeführt, gegebenenfalls geschnitten und aufgewickelt.

In Figur 2 sind gleiche Einzelheiten wie in Figur 1 mit gleichen Bezugsziffern bezeichnet. Es ist im Längsschnitt durch die Längsachse A der Folienblaskopf 11 mit der Ringdüse 12 zur Formung des Folienschlauches 14 erkennbar. Auf dem Folienblaskopf 11 ist eine Wärmeisolierscheibe 25 aufgelegt. Mit Abstand vom Folienblaskopf 11 ist ein mehrteiliger Kühlring 13 dargestellt, der über eine höhenverstellbare Halterung 26 mit dem Folienblaskopf 11 verbunden ist. Der Kühlring 13 umfaßt ein Ringgehäuse 27, das einen Ringraum 40 bildet, und einzelne tangential einlaufende Einlaufstutzen 28, die mit einem rechteckigen Querschnitt in den Ringraum 40 übergehen und im Querschnitt runde Anschlußstutzen 29 bilden. Auf der Innenseite des Ringgehäuses 27 ist ein Austrittsringspalt 30 erkennbar, in dem radiale Leitstege 31 für eine Strömungsberuhigung des Kühlgases sorgen. Der Austrittsringspalt 30 teilt sich in einen ersten Ringkanal 35, der unten liegt, und zwei darüberliegende Ringkanäle 36, 37, und versorgt über diese Kanäle eine Kühlgasringdüse 32, deren Austrittsöffnung entgegen der Abzugsrichtung gerichtet ist, und zwei Kühlgasringdüsen 33, 34, deren Austrittsöffnung in Abzugsrichtung gerichtet ist. Am Kühlringmodul 13 ist eine Volumenstromregelvorrichtung 43 angeordnet, die eine innerhalb des Ringraumes 40 liegende ringförmige radial geschlitzte Flachfeder 44 umfaßt und umfangsverteilt einzelne Stellelemente 45, die unabhängig voneinander ansteuerbar sind und von einem Ringgehäuse 46 eingehaust sind.

Die gesamte Innenkontur des Kühlrings 13 erweitert sich in Abzugs- bzw. Produktionsrichtung und erzeugt zusammen mit dem Folienschlauch einen Venturieffekt d.h. eine Druckabsenkung auf die Kühlluft und damit einen Ansaug- und Aufweiteffekt auf den Folienschlauch. Diese Formgebung hat die Wirkung, daß der Folienschlauch 14 sich im Bereich des Kühlrings 13 im Durchmesser erweitert, da am Austritt des Kühlrings 13 ein Unterdruck entsteht, während gleichzeitig im Inneren des Folienschlauches durch die zuvor genannte Innenkühlvorrichtung ein Überdruck herrscht. Die Erweiterung des Folienschlauches setzt sich fort, bis durch die Kühleffekte des Kühlgases der thermoplastische Kunststoff erstarrt ist, d.h. bis die Einfriergrenze erreicht ist.

Unten am Kühlring 13 ist ein ringförmiger Gewindeeinsatz 61 eingeschraubt, während oben am Kühlring 13 ein Gewindeeinsatz 62 eingeschraubt ist, mit denen durch Verdrehen gegenüber dem Ringgehäuse 27 jeweils die Spaltbreite der Kühlgasringdüsen 32 und 34 verstellt werden kann. Am Gewindeeinsatz 61 Verstellhebel 38 angeschraubt, am Gewindeeinsatz 62 Verstellhebel 39.

In der linken Bildhälfte sind die Strömungsverläufe des Kühlgasstromes mit Pfeilen dargestellt. Es ist erkennbar, daß die beiden Kühlgasringdüsen 33, 34 Kühlgasströme K_{A}1, K_{A}2 entlang der Abzugsrichtung austreten lassen, die sich zu einem Kühlgasstrom K_{A} vereinen, während die Kühlgasringdüse 32 einen Kühlgasstrom K_{G} entgegen der Herstellrichtung des Folienschlauches 14 leitet, der am Folienschlauch 14 entlang verläuft, bis er auf die Wärmeisolierscheibe 25 auf dem Folienblaskopf 11 auftritt, von der er radial nach außen abgeleitet wird.

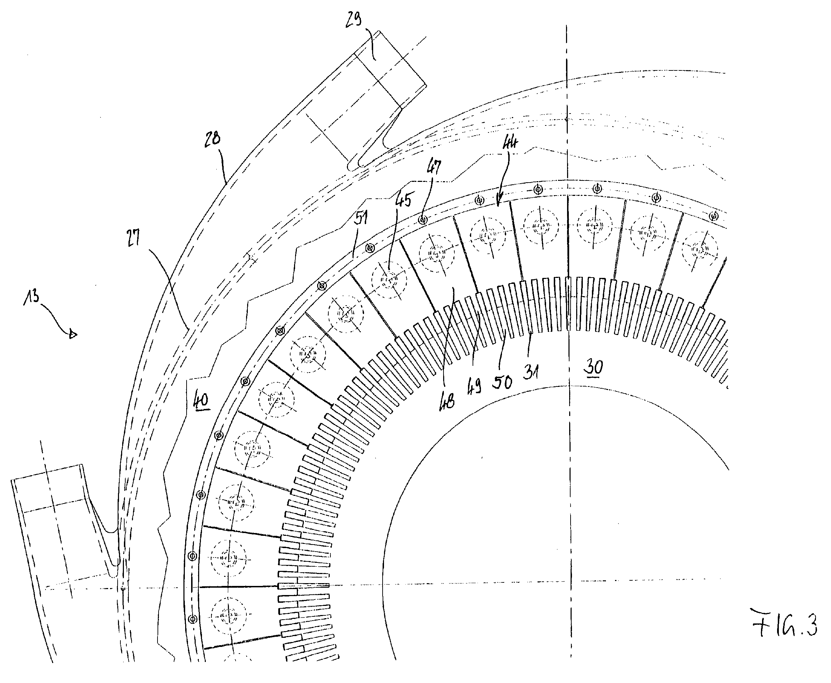

In Figur 3 ist der Kühlring 13 nach Figur 2 in einem horizontalen Schnitt gezeigt. Es sind hierbei im einzelnen das Ringgehäuse 27, einzelne Einlaufstutzen 28 und runde Anschlußstutzen 29 erkennbar. Im geschnittenen Ringraum 40 ist die genannte ringförmige innen radial geschlitzte Flachfeder 44 gezeigt, die mit umfangsverteilten Schrauben 47 mittels eines Spannrings 51 am Gehäuseboden festgeschraubt ist und die einzelne nach innen gerichtete Zungen 48 umfaßt, die jeweils von einem der Verstellelemente 45 beaufschlagbar sind und hierdurch nach oben ausgebogen werden können. Die Zungen 48 haben jeweils mehrere Zungenenden 49, die in Radialkanäle 50 eingreifen, welcher durch umfangsverteilte Leitstege 31 im Austrittsringspalt 30 gebildet werden. Auf diese Weise können jeweils die freien Durchtrittsquerschnitte der Radialkanäle 50 variiert werden, wobei jeweils mehrere Kanäle mit einem einzigen Verstellelement 45 gemeinsam geregelt werden. Auf diese Weise ist der Volumenstrom sektorweise über dem Umfang des Austrittsringspaltes 30 zu regeln, so daß der Kühleffekt auf die Schlauchfolie 14 so variiert werden kann, daß über dem Umfang eine gleichmäßige Foliendicke erzielt werden kann, die jeweils bei der Produktion hinter der Einfriergrenze kontinuierlich oder in Intervallen gemessen wird.

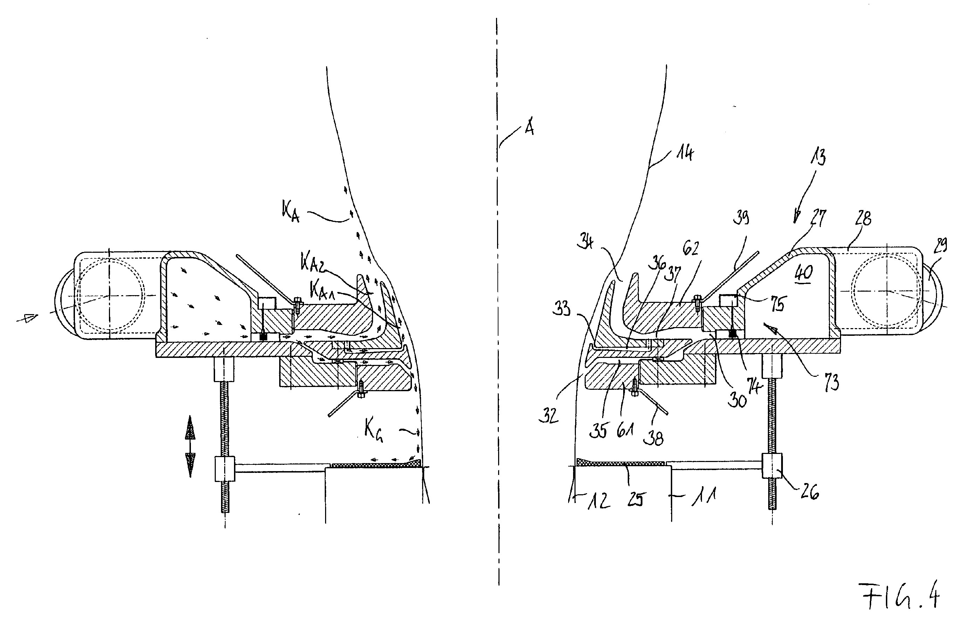

In Figur 4 sind gleiche Einzelheiten mit gleichen Bezugsziffern wie in Figur 2 belegt. Auf die dortige Beschreibung wird insoweit Bezug genommen. Ergänzend ist eine Temperaturregelvorrichtung 73 im Kühlringmodul 13 angeordnet, die einzelne im Austrittsringspalt 30 am Ringraum 40 liegende umfangsverteilt angeordnete Heizelemente 74 umfaßt, die unabhängig voneinander ansteuerbar sind. Die Steuerung und Energiezuführung erfolgt über ein Ringgehäuse 75. Die übrigen Einzelheiten waren bereits im Zusammenhang mit der Figur 2 beschrieben.

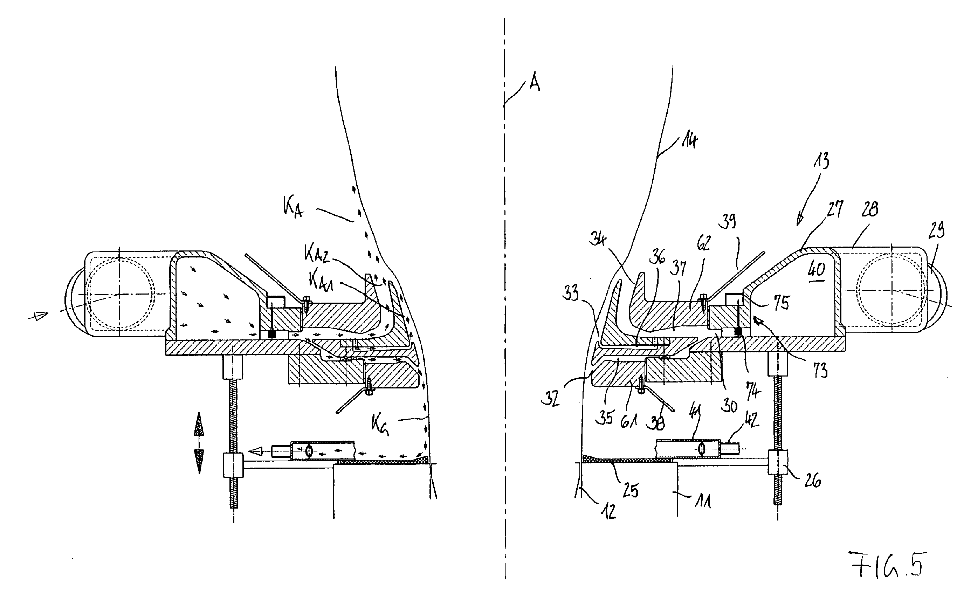

In Figur 5 sind gleiche Einzelheiten wie in Figur 4 mit gleichen Bezugsziffern versehen. Auf die vorangehende Beschreibung wird insoweit Bezug genommen. In Ergänzung ist hier eine ringförmige nach innen offene Absaugvorrichtung 41 auf den Folienblaskopf 11 aufgesetzt, aus der über einzelne umfangsverteilte Stutzen 42 das erwärmte Kühlgas abgeleitet wird, wobei es gegebenenfalls einer Filteranlage zugeführt wird. Die übrigen Einzelheiten waren bereits im Zusammenhang mit der Figur 2 und der Figur 4 beschrieben.

### Bezugszeichenliste

- 10: Blasfolienextruder
- 11: Folienblaskopf
- 12: Ringdüse
- 13: Kühlring
- 14: Folienschlauch
- 15: Innenkühlvorrichtung
- 16: Innenabsaugvorrichtung
- 17: Einfriergrenze
- 18: Kalibriervorrichtung
- 19: Rolle
- 20: Flachlegevorrichtung
- 21: Rolle
- 22: Abziehvorrichtung
- 23: Rolle
- 24: Flachfolie
- 25: Wärmeisolierscheibe
- 26: Halterung, höhenverstellbar
- 27: Ringgehäuse
- 28: Einlaufstutzen
- 29: Anschlußstutzen
- 30: Austrittsringspalt
- 31: Leitsteg
- 32: Kühlgasringdüse
- 33: Kühlgasringdüse
- 34: Kühlgasringdüse
- 35: Ringkanal
- 36: Ringkanal
- 37: Ringkanal
- 38: Verstellhebel
- 39: Verstellhebel
- 40: Ringraum
- 41: Absaugvorrichtung
- 42: Stutzen
- 43: Volumenstromregelvorrichtung
- 44: Flachfeder
- 45: Stellelement
- 46: Ringgehäuse
- 47: Schraube
- 48: Zunge
- 49: Zungenende
- 50: Radialkanal
- 51: Spannring

- 61: Gewindeeinsatz
- 62: Gewindeeinsatz

- 73: Temperaturregelvorrichtung
- 74: Heizelemente
- 75: Ringgehäuse

## Patentansprüche

1. Vorrichtung zur Kühlung eines Folienschlauches (14) aus thermoplastischem Kunststoff bei der Herstellung von Schlauchfolien zur Anordnung an einem Blasfolienextruder (10) mit einem Folienblaskopf (11), der eine Ringdüse (12) umfaßt, aus der der Folienschlauch (14) austritt und in einer Abzugsrichtung weggeführt wird, wobei zumindest zwei Kühlgasringdüsen (32, 33, 34) beabstandet zur Ringdüse (12) angeordnet sind und zumindest zwei Ausblasebenen für Kühlgas bilden,
wobei die zumindest zwei Kühlgasringdüsen (32, 33, 34) Elemente eines gemeinsamen Kühlringes (13) sind und aus einem gemeinsamen Ringraum (40) gespeist werden und
wobei Mittel vorgesehen sind, mit denen der Kühlgasstrom zumindest einer der Kühlgasringdüsen (32, 33, 34) über dem Umfang sektorweise variabel im Volumenstrom steuerbar ist oder über dem Umfang sektorweise variabel in der Temperatur steuerbar ist,
**dadurch gekennzeichnet,**
**daß** zumindest eine Kühlgasringdüse (32) entgegen der Abzugsrichtung des Folienschlauches (14) gerichtet ist und zumindest eine Kühlgasringdüse (33, 34) in Abzugsrichtung des Folienschlauches (14) gerichtet ist und
**daß** sich ein Austrittsringspalt (30), der die Kühlringdüsen (32, 33, 34) speist, in einen ersten Ringkanal (35) zur Versorgung zumindest einer Kühlgasringdüse (32), deren Austrittsöffnung entgegen der Abzugsrichtung gerichtet ist, und zwei darüberliegende Ringkanäle (36, 37) zur Versorgung zumindest zweier Kühlgasringdüsen (33, 34), deren Austrittsöffnungen in Abzugsrichtung gerichtet sind, aufteilt.

2. Vorrichtung nach Anspruch 1,
**dadurch gekennzeichnet,**
**daß** zumindest zwei in Abzugsrichtung des Folienschlauches gerichtete Kühlgasringdüsen (33, 34) und/oder zumindest zwei entgegen der Abzugsrichtung des Folienschlauches gerichtete Kühlgasringdüsen (32) vorgesehen sind.

3. Vorrichtung nach einem der Ansprüche 1 oder 2,
**dadurch gekennzeichnet,**
**daß** zwischen der Ringdüse (12) des Folienblaskopfes (11) und der zumindest einen entgegen der Abzugsrichtung des Folienschlauches (14) gerichteten Kühlgasringdüse (32) eine über den Umfang verlaufende oder verteilte Absaugvorrichtung (41) für Kühlgas angeordnet ist.

4. Vorrichtung nach einem der Ansprüche 1 bis 3,
**dadurch gekennzeichnet,**
**daß** über dem Folienblaskopf (11) ein ringförmiges ein- oder mehrstückiges Ableitblech angeordnet ist.

5. Vorrichtung nach einem der Ansprüche 1 bis 4,
**dadurch gekennzeichnet,**
**daß** auf dem Folienblaskopf (11) eine Wärmeisolierung (25) aufgebracht ist.

## Claims

1. Device for cooling a blown film tubing (14) made from thermoplastics when manufacturing tubular films for arranging on an extruder (10) for blown film with a film blow head (11), which comprises an annular (12), from which the blown film tubing (14) exits and is guided away in a drawing-off direction, wherein at least two annular cooling gas nozzles (32, 33, 34) are arranged distanced to the annular die (12) and form at least two blow-out planes for the cooling gas,
wherein the at least two annular cooling gas nozzles (32, 33, 34) form elements of a common cooling ring (13) and are fed from a common annular chamber (40), and
wherein means are provided, by which the cooling gas flow of at least one of the annular cooling gas nozzles (32, 33, 34) is controllable variable in the volume flow along the circumference in sectors or is controllable variably in the temperature along the circumference in sectors,
**characterised in**
**that** at least one annular cooling gas nozzle (32) is directed against the drawing- off direction of the blown film tubing (14) and at least one annular cooling gas nozzle (33, 34) is directed in drawing-off direction of the blown film tubing (14) and
**that** an annular exiting gap (30), which feeds the annular cooling gas nozzles (32, 33, 34), is separated into a first annular channel (35) for feeding at least one annular cooling gas nozzle (32), which exiting opening is directed against the drawing-off direction, and into two annular channels (36, 37), arranged above, for feeding at least two annular cooling gas nozzle (33, 34), which exiting openings are directed in the drawing-off direction.

2. Device according to claim 1,
**characterised in**
**that** at least two annular cooling gas nozzle (33, 34), directed in drawing-off direction of the blown film tubing, and/or at least two annular cooling gas nozzles (32), directed against the drawing-off direction of the blown film tubing, are provided.

3. Device according to one of claims 1 or 2,
**characterised in**
**that** an extraction device (41) for the cooling gas, which extends or is distributed across the circumference, is arranged between the annular die (12) of the film blow head (11) and the at least one annular cooling gas nozzle (32), directed against the drawing-off direction of the blown film tubing (14).

4. Device according to one of claims 1 to 3,
**characterised in**
**that** an annular diverting plate is arranged above the film blow head (11), said annular diverting plate consists of one of more components.

5. Device according to one of claims 1 to 4,
**characterised in**
**that** a heat insulation (25) is arranged on the film blow head (11).

## Revendications

1. Dispositif de refroidissement d'un tube de film (14) en matériau synthétique thermoplastique lors de la fabrication de films en tube destiné à être agencé sur une extrudeuse de films soufflés (10) comprenant une tête de soufflage de films (11) qui comprend une buse annulaire (12) de laquelle sort le tube de film (14) et est dirigé dans un dispositif d'extraction, sachant qu'au moins deux buses annulaires de gaz de refroidissement (32, 33, 34) sont disposées à distance de la buse annulaire (12) et forment au moins deux niveaux de soufflage pour le gaz de refroidissement,
sachant que les au moins deux buses annulaires de gaz de refroidissement (32, 33, 34) sont des éléments d'un anneau de refroidissement (13) commun et sont alimentées par un espace annulaire (40) commun et
sachant que des moyens sont prévues avec lesquels le flux de gaz de refroidissement d'au moins une des buses annulaires de gaz de refroidissement (32, 33, 34) peut être commandé de façon variable en débit volumique par secteur sur le pourtour ou peut être commandé de façon variable en température par secteur sur le pourtour,
**caractérisé en ce qu'**
au moins une buse annulaire de gaz de refroidissement (32) est dirigée contre le sens d'extraction du tube de film (14) et au moins une buse annulaire de gaz de refroidissement (33, 34) est dirigée dans le sens d'extraction du tube de film (14), et qu'une fente annulaire d'évacuation (30) qui alimente les buses annulaires de gaz de refroidissement (32, 33, 34) se partage en un premier canal annulaire (35) pour alimenter au moins une buse annulaire de gaz de refroidissement (32) dont l'ouverture d'évacuation est dirigée contre le sens d'extraction, et deux canaux annulaires (36, 37) reposant dessus pour alimenter au moins deux buses annulaires de gaz de refroidissement (33, 34) dont les ouvertures d'évacuation sont dirigées dans le sens d'extraction.

2. Dispositif selon la revendication 1,
**caractérisé en ce qu'**
au moins deux buses annulaires de gaz de refroidissement (33, 34) dirigées dans le sens d'extraction du tube de film et/ou au moins deux buses annulaires de gaz de refroidissement (32) dirigées contre le sens d'extraction du tube de film sont prévues.

3. Dispositif selon la revendication 1 ou 2,
**caractérisé en ce qu'**
un dispositif d'aspiration (41) pour le gaz de refroidissement passant ou étant réparti sur le pourtour est prévu entre la buse annulaire (12) de la tête de soufflage de films (11) et l'au moins une buse annulaire de gaz de refroidissement (32) dirigée contre le sens d'extraction du tube de film (14).

4. Dispositif selon l'une des revendications 1 à 3,
**caractérisé en ce qu'**
une tôle déflectrice annulaire d'une seule pièce ou en plusieurs parties est disposée au-dessus de la tête de soufflage de films (11).

5. Dispositif selon l'une des revendications 1 à 4,
**caractérisé en ce qu'**
une isolation thermique (25) est placée sur la tête de soufflage de films (11).
